# EUROPÄISCHE PATENTANMELDUNG

(11) **EP 3 372 858 A1**
(43) Veröffentlichungstag der Anmeldung: **12.09.2018**
(21) Anmeldenummer: 17159627.3
(22) Anmeldetag: 07.03.2017
(51) Int. Cl.: F16D 3/04, F16D 3/12

(54) **KUPPLUNGSELEMENTE MIT SCHWINGUNGSDÄMPFUNG**

(71) Anmelder: Siemens Aktiengesellschaft, 80333 München (DE)
(72) Erfinder: Vollmer, Rolf, 36129 Gersfeld (DE); Braun, Matthias, 97711 Weichtungen (DE)

(57) **Zusammenfassung**

Die Erfindung betrifft eine Kupplung zur Anbindung eines Gebers an eine elektrische Maschine, wobei die Kupplung ein mit einer Geberwelle koppelbares Geberwellenendstück und ein mit einer Maschinenwelle koppelbares Maschinenwellenendstück umfasst, wobei mindestens ein Endstück über wenigstens einen Mitnehmer verfügt. Die Mitnehmer weisen einen mit granularem Material, vorzugsweise Stahl-Pulver, gefüllten Hohlraum auf, der eine Dämpfung von Schwingungen und Stößen bewirkt. Ferner betrifft die Erfindung ein geeignetes Herstellungsverfahren mittels additiver Fertigung und die Verwendung einer derartigen Kupplung.

## Beschreibung

Die Erfindung betrifft eine Kupplung zur Anbindung eines Gebers an eine elektrische Maschine, wobei die Kupplung ein mit einer Geberwelle koppelbares Geberwellenendstück und ein mit einer Maschinenwelle koppelbares Maschinenwellenendstück umfasst und wobei mindestens ein Endstück über wenigstens einen Mitnehmer verfügt. Ferner betrifft die Erfindung ein geeignetes Herstellungsverfahren und die Verwendung einer derartigen Kupplung sowie ein Wellenendstück.

Wird ein Geber mittels eines Kupplungselements mit einer elektrischen Maschine verbunden, so ergibt sich aus der Kupplung und der Massenträgheit des Gebers ein schwingungsfähiges System. Hierdurch können in der Resonanz Schwingungsüberhöhungen auftreten.

Bisher wurden elektrische Maschinen unterhalb der Resonanz betrieben oder es wurden Filter eingesetzt, die die Anregung im Resonanzpunkt verhindern. Der Betrieb unterhalb der Resonanz schränkt jedoch die Dynamik ein, der Betrieb mit Filter die Rechenleistung des Reglers.

Aus der Patentschrift EP2169245B1 ist eine Wellenkupplung und ein Verfahren zur Ankopplung eines Gebers, der eine Geberwelle aufweist, an eine elektrische Maschine, die eine Maschinenwelle aufweist, bekannt, wobei die Wellenkupplung umfasst:
- ein mit der Geberwelle koppelbares Geberwellenendstück,
- ein mit der Maschinenwelle koppelbares Maschinenwellenendstück und
- ein Drehmomentübertragungselement,
wobei zur Kopplung der Geberwelle mit der Maschinenwelle das Geberwellenendstück gegenüberliegend zum Maschinenwellenendstück angeordnet ist und das Drehmomentübertragungselement zwischen dem Geberwellenendstück und dem Maschinenwellenendstück angeordnet ist.

Eine ähnliche Wellenkupplung geht auch aus der Druckschrift DE102006043897A1 hervor.

Der Erfindung liegt die Aufgabe zugrunde, eine Kupplung, die vorzugsweise wenigstens ein Geberwellenendstück und wenigstens ein Maschinenwellenendstück umfasst, zu schaffen, die eine Dämpfung eingeleiteter Schwingungen und Stöße bewirkt. Weiterhin liegt der Erfindung die Aufgabe zugrunde, ein entsprechendes Wellenendstück zu schaffen.

Die Lösung der gestellten Aufgabe gelingt durch eine Kupplung zur Anbindung eines Gebers an eine elektrische Maschine, wobei die Kupplung ein mit einer Geberwelle koppelbares Geberwellenendstück und ein mit einer Maschinenwelle koppelbares Maschinenwellenendstück umfasst, wobei mindestens eines der Endstücke über wenigstens einen Mitnehmer verfügt, wobei der Mitnehmer mindestens einen mit granularem Material gefüllten, vollständig umschlossenen Hohlraum aufweist.

Ferner wird die Aufgabe gelöst durch ein Verfahren zur Herstellung eines Wellenendstücks, bei welchem mindestens ein Hohlraum ausgebildet wird, in welchem granulares Material verbleibt oder hinzugefügt wird.

Zudem wird die Aufgabe gelöst durch die Verwendung einer Kupplung zur Dämpfung von Schwingungen und Stößen.

Weiterhin wird die das Wellenendstück betreffende Aufgabe gelöst durch ein Wellenendstück für eine Kupplung, wobei das Wellenendstück über wenigstens einen Mitnehmer verfügt und wobei der Mitnehmer mindestens einen mit granularem Material gefüllten, vollständig umschlossenen Hohlraum aufweist.

Weitere vorteilhafte Ausführungen ergeben sich aus den Unteransprüchen.

Die Erfindung bietet den Vorteil, dass das in den Hohlräumen der Wellenendstücke befindliche granulare Material Stöße und Schwingungen dämpft. Besonders in der Resonanz treten Schwingungsüberhöhungen, die durch das schwingungsfähige System aus Kupplung und Massenträgheit des Gebers verursacht werden, auf und können so gedämpft werden. Dies bedeutet eine Dämpfung der Übertragungsfunktion im Resonanzpunkt, wodurch die elektrische Maschine in einem erweiterten Frequenzbereich betrieben und auf elektronische Filtermaßnahmen verzichtet werden kann.

Vorteilhaft wird ein Drehmomentübertragungselement zwischen dem Geber- und Maschinenwellenendstück eingefügt. Dieses bewirkt eine Verminderung der Reibung und wird vorzugsweise als Kunststoffbauteil ausgeführt.

Um eine Unwucht zu vermeiden, verfügt jedes Endstück über vorzugsweise zwei Mitnehmer. Jeder Mitnehmer verfügt über vorzugsweise genau einen vollständig umschlossenen Hohlraum, der vorzugsweise vollständig mit granularem Material gefüllt ist. Die Größe des Hohlraums definiert sich aus der Anwendung, da die Steifigkeit des Endstücks mit steigender Größe des Hohlraums abnimmt. Das Geber- oder Maschinenwellenendstück muss jedoch den anwendungsspezifischen Anforderungen standhalten.

Unter anderem aufgrund seiner Festigkeit und Belastbarkeit eignet sich Stahl besonders gut als Material für die Endstücke bzw. Stahl-Pulver als granulares Material zur Füllung der Hohlräume in den Mitnehmern.

Als Verfahren zur Herstellung eines Wellenendstücks, vorzugsweise als Endstück einer Geber- oder Maschinenwelle ausgeführt, bei welchem mindestens ein vollständig umschlossener Hohlraum ausgebildet wird, in welchem granulares Material verbleibt oder hinzugefügt wird, eignet sich insbesondere ein additives Fertigungsverfahren, vorzugsweise selektives Laserschmelzen (SLM) oder selektives Lasersintern (SLS).

Bei SLS oder SLM wird das Endstück schichtweise aus granularem Material aufgebaut und ein Hohlraum ausgespart. Als granulares Material eignet sich in besonderer Weise Stahl-Pulver. Vorteilhaft wird der schichtweise Aufbau derart durchgeführt, dass das Bauteil Schicht für Schicht gefertigt wird und das granulare Material, das in dem Hohlraum nicht aufgeschmolzen wird, Schicht für Schicht im Hohlraum verbleibt. Das Endstück sowie die Füllung der Hohlräume bestehen somit gemäß einer bevorzugten Ausführungsform aus demselben Material.

Im Folgenden wird die Erfindung anhand der in den Figuren dargestellten Ausführungsbeispiele näher beschrieben und erläutert. Es zeigen:
- FIG 1: eine Ausgestaltung einer Kupplung bestehend aus einem Geberwellenendstück, einem Drehmomentübertragungselement und einem Maschinenwellenendstück zur Anbindung eines Gebers an eine elektrische Maschine,
- FIG 2: eine Ausgestaltung der beiden Endstücke, die mit pulvergefüllten Hohlräumen versehen sind und
- FIG 3: den Ablauf des Herstellungsverfahrens.

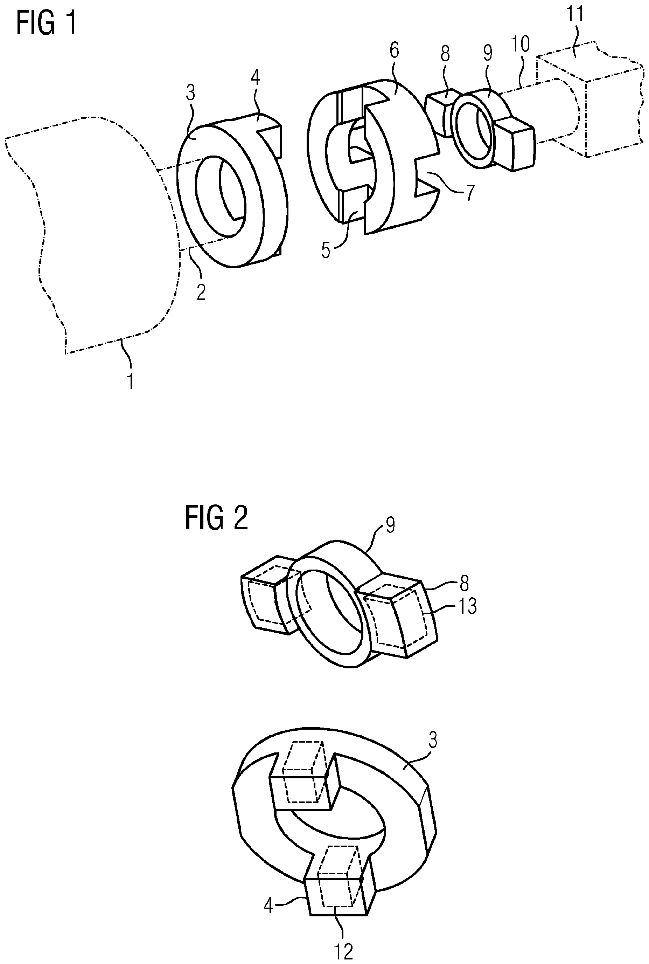

FIG 1 zeigt eine Ausgestaltung einer Kupplung zur Anbindung eines Gebers 11 mit einer Geberwelle 10 an eine elektrische Maschine 1 mit einer Maschinenwelle 2. Die Kupplung umfasst ein Geberwellenendstück 9, ein Maschinenwellenendstück 3 und ein Drehmomentübertragungselement 6. Das Geberwellenendstück 9 verfügt über zwei Mitnehmer 8. Das Maschinenwellenendstück 3 verfügt über zwei Mitnehmer 4. Die Mitnehmer 8 des Geberwellenendstücks 9 werden mit der Nut 7 des Drehmomentübertragungselements 6 gekoppelt, die Mitnehmer 4 des Maschinenwellenendstücks 3 werden mit der Nut 5 des Drehmomentübertragungselements 6 gekoppelt.

FIG 2 zeigt eine Ausgestaltung des Geberwellenendstücks 9 und des Maschinenwellenendstücks 3. Das Geberwellenendstück 9 verfügt über zwei Mitnehmer 8, die jeweils mit einem pulvergefüllten Hohlraum 13 ausgestattet sind. Das Maschinenwellenendstück 3 verfügt über zwei Mitnehmer 4, die jeweils mit einem pulvergefüllten Hohlraum 12 ausgestattet sind.

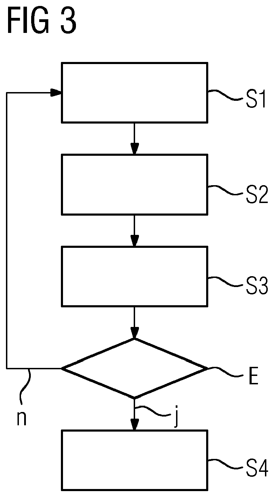

FIG 3 beschreibt den Ablauf des Herstellungsverfahrens. Wie bei einem additiven Fertigungsverfahren üblich bringt eine Rakel beim selektiven Laserschmelzen in einem ersten Verfahrensschritt S1 zunächst eine dünne Schicht granularen Materials, vorzugsweise Stahl-Pulver, auf eine Grundplatte auf. Anschließend wird gemäß der technischen Vorgabe das Pulver mittels Laserstrahlung geschmolzen und bildet nach der Erstarrung eine feste Materialschicht. Pulver, welches nicht aufgeschmolzen wurde, verbleibt in Verfahrensschritt S2 dort und wird nicht ausgeblasen. Anschließend wird in Verfahrensschritt S3 die Grundplatte um den Betrag der Schichtdecke abgesenkt und erneut in Verfahrensschritt S1 Pulver aufgetragen, wenn während der Statusabfrage E festgestellt wird, dass das Bauteil noch nicht fertiggestellt wurde, in FIG 3 mit n gekennzeichnet. Schicht für Schicht werden diese Vorgänge wiederholt. Während des schichtweisen Aufbaus des Endstücks zeichnet sich ein Hohlraum ab, der in Verfahrensschritt S2 nicht ausgeblasen wird. Die Vorgänge werden so lange wiederholt, bis das Endstück in Verfahrensschritt S4 gemäß Vorgabe fertiggestellt ist, in FIG 3 mit j gekennzeichnet. Es entsteht ein Wellenendstück, das über einen Hohlraum verfügt, der mit dem Stahl-Pulver gefüllt ist.

## Patentansprüche

1. Kupplung zur Anbindung eines Gebers (11) an eine elektrische Maschine (1), wobei die Kupplung
- ein mit einer Geberwelle (10) koppelbares Geberwellenendstück (9) und
- ein mit einer Maschinenwelle (2) koppelbares Maschinenwellenendstück (3) umfasst,
wobei mindestens eines der Endstücke (3, 9) über wenigstens einen Mitnehmer (4, 8) verfügt,
**dadurch gekennzeichnet, dass** der Mitnehmer (4, 8) mindestens einen mit granularem Material gefüllten, vollständig umschlossenen Hohlraum (12, 13) aufweist.

2. Kupplung nach Anspruch 1, wobei zwischen dem Geber- und dem Maschinenwellenendstück (9, 3) mindestens ein Drehmomentübertragungselement (6) angebracht ist.

3. Kupplung nach Anspruch 2, wobei das Drehmomentübertragungselement (6) aus Kunststoff gefertigt ist.

4. Wellenendstück für eine Kupplung nach einem der Ansprüche 1 bis 3, wobei das Wellenendstück (3, 9) über wenigstens einen Mitnehmer verfügt,
**dadurch gekennzeichnet, dass** der Mitnehmer (4, 8) mindestens einen mit granularem Material gefüllten, vollständig umschlossenen Hohlraum (12, 13) aufweist.

5. Wellenendstück nach Anspruch 4, wobei das Wellenendstück (3, 9) über genau zwei Mitnehmer (4, 8) verfügt.

6. Wellenendstück nach einem der Ansprüche 4 bis 5, wobei jeder Mitnehmer (4, 8) über genau einen mit granularem Material gefüllten Hohlraum (12, 13) verfügt.

7. Wellenendstück nach einem der Ansprüche 4 bis 6, wobei jedes Endstück (3, 9) aus Stahl ausgebildet ist.

8. Wellenendstück nach einem der Ansprüche 4 bis 7, wobei der Hohlraum (12, 13) vollständig mit granularem Material gefüllt ist.

9. Wellenendstück nach einem der Ansprüche 4 bis 8, wobei der Hohlraum (12, 13) vollständig mit Stahl-Pulver gefüllt ist.

10. Wellenendstück nach einem der Ansprüche 4 bis 9, wobei das Wellenendstück als Endstück einer Geber- oder Maschinenwelle (9, 3) ausgeführt ist.

11. Verfahren zur Herstellung eines Wellenendstücks (3, 9) nach einem der Ansprüche 4-10, bei welchem mindestens ein vollständig umschlossener Hohlraum (12, 13) ausgebildet wird, in welchem granulares Material verbleibt oder hinzugefügt wird.

12. Verfahren nach Anspruch 11, wobei das Wellenendstück (3, 9) mittels additiver Fertigung, vorzugsweise mittels selektivem Laserschmelzen (SLM) oder selektivem Lasersintern (SLS), hergestellt wird.

13. Verfahren nach einem der Ansprüche 11 bis 12, wobei als granulares Material Stahl-Pulver verwendet wird.

14. Verfahren nach einem der Ansprüche 11 bis 13, wobei das Endstück (3, 9) schichtweise aus dem granularen Material aufgebaut wird und der Hohlraum (12, 13) ausgespart wird, wobei der Hohlraum (12, 13) während des schichtweisen Aufbaus schichtweise mit dem granularen Material gefüllt wird.

15. Verwendung einer Kupplung nach Anspruch 1 zur Dämpfung von Schwingungen oder Stößen.

16. Verwendung einer Kupplung nach Anspruch 15, wobei Schwingungsüberhöhungen bei einer Resonanzfrequenz, die insbesondere durch das schwingungsfähige System aus der Kupplung nach einem der Ansprüche 1 bis 3 und der Massenträgheit eines mit der Kupplung verbundenen Gebers (11) verursacht werden, gedämpft werden.
